# EUROPÄISCHE PATENTSCHRIFT

(11) **EP 2 137 811 B1**
(45) Veröffentlichungstag und Bekanntmachung des Hinweises auf die Patenterteilung: **30.11.2016**
(21) Anmeldenummer: 07722072.1
(22) Anmeldetag: 19.03.2007
(51) Int. Cl.: H02M 7/757, H02J 3/36

(54) **STEUEREINRICHTUNG FÜR STROMRICHTERSTATIONEN BEI EINER HOCHSPANNUNGSGLEICHSTROMÜBERTRAGUNGSEINRICHTUNG**
CONTROL DEVICE FOR RECTIFIER STATIONS IN A HIGH-VOLTAGE DC TRANSMISSION SYSTEM
DISPOSITIF DE COMMANDE POUR POSTES DE CONVERSION DANS UN SYSTÈME DE TRANSPORT DE COURANT CONTINU À HAUTE TENSION

(43) Veröffentlichungstag der Anmeldung: 30.12.2009
(73) Patentinhaber: Siemens Aktiengesellschaft, 80333 München (DE)
(72) Erfinder: RITTIGER, Jürgen, 91074 Herzogenaurach (DE)
(86) Internationale Anmeldenummer: PCT/DE2007/000512
(87) Internationale Veröffentlichungsnummer: WO 2008/113307

(56) Entgegenhaltungen:
- WO-A-96/24978
- GB-A- 2 295 506
- US-A- 3 768 001
- KARLECIK-MAIER F ET AL: "SIMULATION VON HOCH-SPANNUNGSLEICHSTROM-UEBERTRAGUNG UND STATISCHEN KOMPENSATOREN" ELEKTRIE, VEB VERLAG TECHNIK. BERLIN, DD, Bd. 45, Nr. 3, Januar 1991 (1991-01), Seiten 100-103, XP000225607 ISSN: 0013-5399

## Beschreibung

Die Erfindung betrifft eine Steuereinrichtung für Stromrichterstationen bei einer Hochspannungsgleichstromübertragungseinrichtung.

Das Dokument GB2295506 offenbart eine Steuereinrichtung gemäss dem Oberbegriff des Anspruchs 1.

Bei der Hochspannungsgleichstromübertragung ist es erforderlich, dass Stromrichterstationen, die in Abhängigkeit der Stromrichtung als Gleichrichter oder als Wechselrichter arbeiten, beim Wechseln des Betriebszustandes der Hochspannungsgleichstromübertragungseinrichtung definiert angesteuert werden. Bei der heute üblichen Bauweise der Stromrichterstationen mit Thyristoren erfolgt dies üblicherweise durch Setzen von die Stromrichterstationen ansteuernden Zündwinkelreglern auf vorausberechnete Werte, die entsprechend dem neuen Betriebszustand festgelegt werden. Nach einer gleichzeitigen Freigabe der Zündimpulse an den Stromrichterstationen werden die Zündwinkelregler gleichzeitig freigegeben, wobei anschließend über einen Regelkreis die Zündwinkel ausgehend von den vorausberechneten Werten auf die Nennwerte gebracht werden.

Der Erfindung liegt die Aufgabe zugrunde, eine Steuereinrichtung für Stromrichterstationen bei einer Hochspannungsgleichstromübertragungseinrichtung anzugeben, mit der in verhältnismäßig kurzer Zeit ausgehend von einem anfänglichen Betriebszustand ein neuer stationärer Betriebszustand erreichbar ist. Diese Aufgabe wird bei einer Steuereinrichtung für Stromrichterstationen bei einer Hochspannungsgleichstromübertragungseinrichtung erfindungsgemäß gelöst mit einer Gleichrichteransteuereinheit zum Ansteuern einer als Gleichrichter arbeitenden Stromrichterstation und mit einer Wechselrichteransteuereinheit zum Ansteuern einer als Wechselrichter arbeitenden weiteren Stromrichterstation, die jeweils einen Zündwinkelregler zum Einstellen und Regeln von Zündwinkeln für den Gleichrichter beziehungsweise den Wechselrichter aufweisen, wobei zwischen die Gleichrichteransteuereinheit und die Wechselrichteransteuereinheit ein Verzögerungsglied gelegt ist, mit dem eine vorbestimmte Verzögerungszeit nach dem Freischalten des Zündwinkelreglers der Gleichrichteransteuereinheit zum Regeln des Zündwinkels des Gleichrichters der Zündwinkelregler der Wechselrichteransteuereinheit zum Regeln des Zündwinkels des Wechselrichters freischaltbar ist.

Dadurch, dass erfindungsgemäß der Zündwinkelregler für den Wechselrichter zeitlich verzögert nach dem Zündwinkelregler für den Gleichrichter freigeschaltet wird, lässt sich zunächst der Zündwinkel für den Gleichrichter von einem ausgehend von dem neuen Betriebszustand vorausberechneten Wert auf einen Übergangswert einregeln, der bereits verhältnismäßig nahe einem späteren, quasistationären Wert liegt, wobei dieser Regelvorgang unbeeinflusst durch Vorgänge an der Wechselrichteransteuereinheit abläuft. Erst wenn nach der Verzögerungszeit die Wechselrichteransteuereinheit zum Ansteuern des Wechselrichters ausgehend von einem anfänglichen vorausberechneten Wert für den Zündwinkel des Wechselrichters zugeschaltet wird, beeinflusst der entsprechende Regelvorgang an dem Wechselrichter die Gleichrichteransteuereinheit, was jedoch aufgrund des dort bereits im Wesentlichen abgeschlossenen Regelvorganges länger andauernde Ausgleichsvorgänge vermeidet. Insgesamt ergibt sich eine verhältnismäßig kurze Zeitdauer für das Überführen der Hochspannungsgleichstromübertragungseinrichtung von dem anfänglichen Betriebszustand in den weiteren Betriebszustand.

Weitere zweckmäßige Ausgestaltungen der Erfindung sind Gegenstand der Unteransprüche.

Nachfolgend wird die Erfindung anhand eines Ausführungsbeispiels mit Bezug auf die Figuren der Zeichnung näher erläutert. Es zeigen:
- Fig. 1: in einem Schaubild eine Hochspannungsgleichstromübertragungseinrichtung mit einer Steuereinrichtung für Stromrichterstationen und
- Fig. 2: in einem Schaubild die Signale zum Ansteuern der diversen Bauelemente der Gleichrichteransteuereinheit sowie der Wechselrichteransteuereinheit.

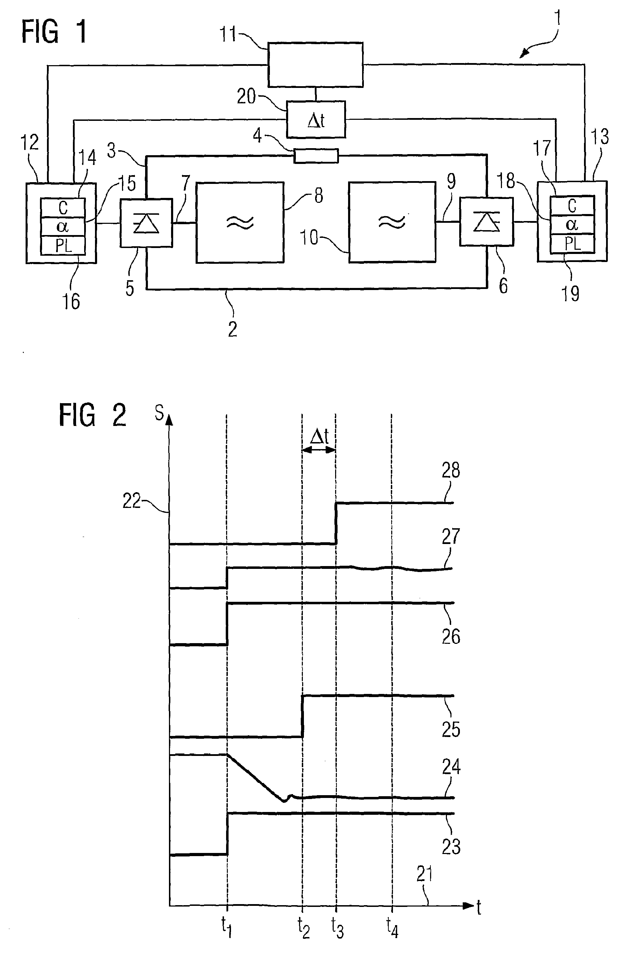

Fig. 1 zeigt in einem Schaubild schematisch eine Hochspannungsgleichstromübertragungseinrichtung 1. Bei diesem Ausführungsbeispiel verfügt die Hochspannungsgleichstromübertragungseinrichtung 1 über eine jeweils durch verhältnismäßig dicke Linien dargestellte erste Gleichstromleitung 2 und eine zweite Gleichstromleitung 3, in die symbolisch ein Verbraucher 4 eingezeichnet ist, um die unweigerlich auftretenden diversen Verluste zu repräsentieren.

Die Gleichstromleitungen 2, 3 sind jeweils an einen Gleichrichter 5 auf Thyristorbasis als einer ersten Stromrichterstation sowie an einen Wechselrichter 6 auf Thyristorbasis als einer zweiten Stromrichterstation angeschlossen. Der Gleichrichter 5 koppelt die Hochspannungsgleichstromübertragungseinrichtung 1 einspeiseseitig über eine mit einer dicken Linie dargestellte erste Wechselspannungsleitungsanordnung 7 an ein erstes Wechselspannungsnetz 8, während der Wechselrichter 6 die Hochspannungsgleichstromübertragungseinrichtung 1 auskoppelseitig über eine mit einer dicken Linie dargestellte zweite Wechselspannungsleitungsanordnung 9 an ein zweites Wechselspannungsnetz 10 koppelt, so dass die Wechselspannungsnetze 8, 10 zum Übertragen von Energie, hier von dem ersten Wechselspannungsnetz 8 in das zweite Wechselspannungsnetz 10, miteinander verbunden sind.

Weiterhin ist aus Fig. 1 ersichtlich, dass die Hochspannungsgleichstromübertragungseinrichtung 1 über eine Zentraleinheit 11 sowie als Stromrichteransteuereinheiten über eine mit dem Gleichrichter 5 verbundene Gleichrichteransteuereinheit 12 sowie über eine mit dem Wechselrichter 6 verbundene Wechselrichteransteuereinheit 13 verfügt, wobei in Fig. 1 die Leitungen zum Übertragen von Steuersignalen aus Gründen der Anschaulichkeit gegenüber den Gleichstromleitungen 2, 3 sowie den Wechselspannungsleitungsanordnungen 7, 9 wesentlich dünner ausgeführt sind.

Mit der Gleichrichteransteuereinheit 12 sind über ein Freigabemodul 14, ein Zündwinkelgeber 15 sowie über einen Zündwinkelregler 16 der Gleichrichter 5 wie weiter unten näher erläutert ansteuerbar.

Entsprechend ist die Wechselrichteransteuereinheit 13 zum Ansteuern des Wechselrichters 6 ebenfalls mit einem Freigabemodul 17, einem Zündwinkelgeber 18 sowie einem Zündwinkelregler 19 ausgestattet.

Mit den Freigabemodulen 14, 17 sind die Zündimpulse für den Gleichrichter 5 beziehungsweise den Wechselrichter 6 aktivierbar. Die Zündwinkelgeber 15, 18 speisen dem Gleichrichter 5 beziehungsweise dem Wechselrichter 6 in Abhängigkeit des anfänglichen Betriebszustandes sowie des einzunehmenden neuen Betriebszustandes abhängige vorausberechnete Zündwinkel ein.

Typische Wechsel von Betriebszuständen sind beispielsweise die Übergänge von einem Abschaltzustand in einen Zustand mit einer Minimalleistung, der Sprung von einer anfänglichen Sollleistung auf eine neue Sollleistung oder ein Energierichtungswechsel mit umgekehrter Energieflussrichtung und damit einem Wechsel der Funktionalitäten der Stromrichterstationen.

Weiterhin ist die Hochspannungsgleichstromübertragungseinrichtung 1 mit einem Verzögerungsglied 20 ausgestattet, das bei diesem Ausführungsbeispiel zweckmäßigerweise über die Zentraleinheit 11 ansteuerbar und mit der Gleichrichteransteuereinheit 12 sowie der Wechselrichteransteuereinheit 13 verbunden ist. Mit dem Verzögerungsglied 20 lässt sich nach Freigeben des Zündwinkelreglers 16 der Gleichrichteransteuereinheit 12 zum Regeln des Zündwinkels für den Gleichrichter 5 nach einer vorbestimmten Verzögerungszeit der Zündwinkelregler 19 der Wechselrichteransteuereinheit 13 zum Regeln des Zündwinkels für den Wechselrichter 6 freigeben.

Im stationären Betriebszustand besteht über die Zentraleinheit 11 eine Verbindung zwischen dem Gleichrichter 5 und dem Wechselrichter 6, um beispielsweise den von Temperaturschwankungen abhängigen ohmschen Widerstand in den Gleichstromleitungen 2, 3 zu berechnen, der für die Vorausberechnung der neuen stationären Zündwinkel der Zündwinkelregler 16, 19 benötigt wird.

Fig. 2 stellt als ein Beispiel für einen Wechsel eines Betriebszustandes den Übergang von einem Ausschaltzustand in einen Betriebszustand mit einer vorgeschriebenen Nennleistung, beispielsweise der Minimalleistung, in einer grafischen Darstellung von anschaulichen Signalverläufen für wesentliche Bauelemente der in Fig. 1 erläuterten Hochspannungsgleichstromübertragungseinrichtung 1 dar. Auf einer Zeitachse 21 als Abszisse ist die Zeit t mit charakteristischen Zeitpunkten t₁, t₂, t₃, t₄ abgetragen. Auf einer zu der Zeitachse 21 rechtwinklig stehenden Signalachse 22 als Ordinate sind in willkürlichen Einheiten Signalwerte S abgetragen.

Der in Fig. 2 unterste Signalverlauf stellt das Zündimpulsfreigabesignal 23 aus dem Freigabemodul 14 der Gleichrichteransteuereinheit 12 dar. Bis zum Zeitpunkt t₁ ist das Zündimpulsfreigabesignal 23 blockiert, so dass die Gleichrichteransteuereinheit 12 keine Zündimpulse auf den Gleichrichter 5 ausgibt. Zum Zeitpunkt t₁ wechselt das Zündimpulsfreigabesignal 23 von dem niedrigen Pegel auf einen dann andauernden hohen Pegel, bei dem die Gleichrichteransteuereinheit 12 Zündimpulse auf den Gleichrichter 5 gibt.

Der in Fig. 2 unmittelbar oberhalb des Zündimpulsfreigabesignals 23 liegende Signalverlauf stellt das Zündwinkelsignal 24 aus dem Zündwinkelgeber 15 der Gleichrichteransteuereinheit 12 dar. Bis zum Zeitpunkt t₁ liegt das Zündwinkelsignal 24 auf einem einem Zündwinkel von 90 Grad entsprechenden Wert, während es ab dem Zeitpunkt t₁ bis zu einem späteren Zeitpunkt auf den vorausberechneten Wert für den Zündwinkel des Gleichrichters 5 gefahren wird.

Der in Fig. 2 unmittelbar oberhalb des Zündwinkelsignals 24 liegende Signalverlauf stellt das Zündwinkelreglerfreigabesignal 25 dar, mit dem der Zündwinkelregler 16 der Gleichrichteransteuereinheit 12 zum Regeln des Zündwinkelsignals 24 zu einem Zeitpunkt t₂ nach Einfahren von charakteristischen Parametern des Gleichstromkreises in Reglergrenzen freigegeben wird, was in der Darstellung gemäß Fig. 2 durch den Wechsel des Zündwinkelreglerfreigabesignals 25 von einem mittigen Pegel auf einen hohen Pegel dargestellt ist. Somit ist ab dem Pegelwechsel des Zündwinkelreglerfreigabesignals 25 der Gleichrichter 5 bis auf die aufgrund des Regelvorganges geringfügigen Schwankungen in dem Zündwinkelsignal 24 in einem stationären Betriebszustand.

Der in Fig. 2 mit einem gewissen Abstand oberhalb des Zündwinkelreglerfreigabesignals 25 liegende Signalverlauf stellt das Zündimpulsfreigabesignal 26 aus dem Freigabemodul 17 der Wechselrichteransteuereinheit 13 dar. Das Zündimpulsfreigabesignal 26 für den Wechselrichter 6 wechselt entsprechend dem Zündimpulsfreigabesignal 23 für den Gleichrichter 5 zum Zeitpunkt t₁ von einem mittigen Pegel auf einen hohen Pegel.

Der in Fig. 2 unmittelbar oberhalb des Zündimpulsfreigabesignals 26 für den Wechselrichter 6 dargestellte Signalverlauf stellt das Zündwinkelsignal 27 aus dem Zündwinkelgeber 18 der Wechselrichteransteuereinheit 13 dar. Zum Zeitpunkt t₁ wechselt das Zündwinkelsignal 27 von einem Anfangspegel auf einen vorausberechneten Wert zum anfänglichen Ansteuern des Wechselrichters 6 entsprechenden Pegel um, der unter Berücksichtigung der Betriebscharakteristika der Hochspannungsgleichstromübertragungseinrichtung 1 in dem neuen Betriebszustand vorausberechnet worden ist.

Der in Fig. 2 unmittelbar oberhalb des Zündwinkelsignals 27 für den Wechselrichter 6 liegende Signalverlauf stellt das Zündwinkelreglerfreigabesignal 28 für die Freigabe des Zündwinkelreglers 19 der Wechselrichteransteuereinheit 13 dar, das zu einem Zeitpunkt t₃ von einem niedrigen Pegel auf einen hohen Pegel zum Freigeben des Zündwinkelreglers 19 der Wechselrichteransteuereinheit 13 wechselt, so dass ab dem Zeitpunkt t₃ der Zündwinkelregler 19 der Wechselrichteransteuereinheit 13 den Zündwinkel für den Wechselrichter 6 regelt. Diese Verzögerungszeit Δt=t₃-t₂ wird durch das Verzögerungsglied 20 bestimmt.

Zu einem bestimmten, nach dem Zeitpunkt t₃ später liegenden Zeitpunkt t₄ ist die Hochspannungsgleichstromübertragungseinrichtung 1 dann in dem neuen und auch stationären Betriebszustand.

Typischerweise beträgt die Zeitdauer von dem Zeitpunkt t₁ bis zu dem Zeitpunkt t₄ etwa 250 Millisekunden, während der Wechsel des Betriebszustandes gemäß der herkömmlichen Technik etwa 1 Sekunde dauert.

Es versteht sich, dass der erfindungsgemäße Ansatz, nämlich das Zündwinkelreglerfreigabesignal 28 für die als Wechselrichter 6 arbeitende Stromrichterstation gegenüber dem Zündwinkelreglerfreigabesignal 25 für die als Gleichrichter 5 arbeitende Stromrichterstation so ausreichend verzögert zum Freigeben zu schalten, dass das Zündwinkelsignal 24 für den Gleichrichter 5 zu einem innerhalb einer vorbestimmten unteren Reglergrenze und einer vorbestimmten oberen Reglergrenze nur noch verhältnismäßig gering schwankenden Zündwinkel führt, entsprechend bei anderen Betriebswechseln wie beispielsweise einem Energierichtungswechsel entsprechend einsetzbar ist.

## Patentansprüche

1. Steuereinrichtung für Stromrichterstationen (5, 6) bei einer Hochspannungsgleichstromübertragungseinrichtung (1) mit einer Gleichrichteransteuereinheit (12) zum Ansteuern einer als Gleichrichter (5) arbeitenden Stromrichterstation und mit einer Wechselrichteransteuereinheit (13) zum Ansteuern einer als Wechselrichter (6) arbeitenden weiteren Stromrichterstation, die jeweils einen Zündwinkelregler (16, 19) zum Einstellen und Regeln von Zündwinkeln für den Gleichrichter (5) beziehungsweise den Wechselrichter (6) aufweisen, wobei zwischen die Gleichrichteransteuereinheit (12) und die Wechselrichteransteuereinheit (13) ein Verzögerungsglied (20) gelegt ist, **dadurch gekennzeichnet, dass** mit dem Verzögerungsglied
eine vorbestimmte Verzögerungszeit nach dem
Freischalten des Zündwinkelreglers (16) der Gleichrichteransteuereinheit (12) zum Regeln des Zündwinkels des Gleichrichters (5) der Zündwinkelregler (19) der Wechselrichteransteuereinheit (13) zum Regeln des Zündwinkels des Wechselrichters (6) freischaltbar ist.

2. Steuereinrichtung nach Anspruch 1, **dadurch gekennzeichnet, dass** die Stromrichterstationen (5, 6) über eine Zentraleinheit (11) miteinander verbunden sind.

3. Steuereinrichtung nach Anspruch 2, **dadurch gekennzeichnet, dass** das Verzögerungsglied (20) zum Verändern der Verzögerungszeit über die Zentraleinheit (11) ansteuerbar ist.

## Claims

1. Control device for converter stations (5, 6) in a high-voltage direct-current transmission device (1) having a rectifier drive unit (12) for driving a converter station which operates as a rectifier (5), and having an inverter drive unit (13) for driving a further converter station which operates as an inverter (6), which each have a trigger angle regulator (16, 19) for setting and regulating trigger angles for the rectifier (5) and the inverter (6), respectively, with a delay element (20) being located between the rectifier drive unit (12) and the inverter drive unit (13), **characterized in that** by means of the delay element the trigger angle regulator (19) of the inverter drive unit (13) for regulating the trigger angle of the inverter (6) can be enabled a predetermined delay time after the enabling of the trigger angle regulator (16) of the rectifier drive unit (12) for regulating the trigger angle of the rectifier (5).

2. Control device according to Claim 1, **characterized in that** the converter stations (5, 6) are connected to one another via a central unit (11).

3. Control device according to Claim 2, **characterized in that** the delay element (20) can be driven via the central unit (11) in order to vary the delay time.

## Revendications

1. Dispositif de commande de postes ( 5, 6 ) de convertisseur de courant dans un dispositif ( 1 ) de transport de courant continu à haute tension, comprenant une unité ( 12 ) d'excitation de redresseur pour exciter un poste de convertisseur de courant travaillant en redresseur ( 5 ) et une unité ( 13 ) d'excitation d'onduleur pour commander un autre poste de convertisseur travaillant en onduleur ( 6 ), qui ont, respectivement, un régleur ( 16, 19 ) d'angle d'amorçage pour régler et réguler des angles d'amorçage du redresseur ( 5 ) et, respectivement, de l'onduleur ( 6 ), un élément ( 20 ) de temporisation étant mis entre l'unité ( 12 ) d'excitation du redresseur et l'unité ( 13 ) d'excitation de l'onduleur, **caractérisé en ce que**, par l'élément de temporisation, après un temps de retard défini à l'avance, après la déconnexion du régleur ( 16 ) d'angle d'amorçage de l'unité ( 12 ) d'excitation du redresseur pour la régulation de l'angle d'amorçage du redresseur ( 5 ), le régleur ( 19 ) d'angle d'amorçage de l'unité ( 13 ) d'excitation de l'onduleur peut être déconnecté pour le réglage de l'angle d'amorçage de l'onduleur ( 6 ).

2. Dispositif de commande suivant la revendication 1, **caractérisé en ce que** les postes ( 5, 6 ) de convertisseur sont reliés entre eux par une unité ( 11 ) centrale.

3. Dispositif de commande suivant la revendication 2, **caractérisé en ce que** l'élément ( 20 ) de temporisation peut être commandé par l'unité ( 11 ) centrale pour modifier le temps de temporisation.
